# EUROPÄISCHE PATENTSCHRIFT

(11) **EP 0 840 674 B1**
(45) Veröffentlichungstag und Bekanntmachung des Hinweises auf die Patenterteilung: **16.08.2001**
(21) Anmeldenummer: 97920585.3
(22) Anmeldetag: 04.04.1997
(51) Int. Cl.: B29C 59/04, B32B 31/00

(54) **VORRICHTUNG ZUM EINBRINGEN EINER OBERFLÄCHENSTRUKTUR IN EIN LAMINAT ODER IN DIE BESCHICHTUNG EINES SUBSTRATES**
DEVICE FOR PROVIDING WITH SURFACE STRUCTURE A LAMINATE OR THE COATING OF A SUBSTRATE
DISPOSITIF POUR INTRODUIRE UNE STRUCTURE DE SURFACE DANS UN STRATIFIE OU DANS LE REVETEMENT D'UN SUBSTRAT

(30) Priorität: 25.04.1996 DE 19616514
(43) Veröffentlichungstag der Anmeldung: 13.05.1998
(73) Patentinhaber: Firma Theodor Hymmen, D-33613 Bielefeld (DE)
(72) Erfinder:
(74) Vertreter: Stracke, Alexander, Dipl.-Ing.
(86) Internationale Anmeldenummer: DE9700690
(87) Internationale Veröffentlichungsnummer: WO9740973

(56) Entgegenhaltungen:
- EP-A- 0 390 409
- EP-A- 0 485 895
- EP-A- 0 516 094
- BE-A- 502 286
- DE-A- 2 327 409
- DE-A- 3 004 321
- DE-A- 4 306 559
- FR-A- 2 472 458
- US-A- 3 129 457
- PATENT ABSTRACTS OF JAPAN vol. 018, no. 354 (M-1632), 5.Juli 1994 & JP 06 091819 A (TOPPAN PRINTING CO LTD), 5.April 1994,

## Beschreibung

Die Erfindung bezieht sich auf eine Vorrichtung zum Einbringen einer Oberflächenstruktur in ein Laminat oder in die Beschichtung eines Substrats, wobei das Laminat oder die Beschichtung aus mit unter Wärme aushärtenden Kondensationsharzen getränkten Papieren besteht.

Das Substrat kann durch irgendeine Platte gebildet werden.

Es ist bekannt, Spanplatten, Holzfaserplatten Hartfaserplatten, Glasfaserplatten u. dgl. mit einer dekorativen Oberflächenschicht zu versehen. Diese Oberflächenschicht kann als Laminat ausgebildet sein, das sich aus mit Kondensationsharzen imprägnierten Papieren zusammensetzt. Diese Laminate werden in Bandpressen, z. B. Doppelbandpressen, kontinuierlich gefertigt, wobei der Verbund zwischen den einzelnen harzgetränkten Papierlagen unter Wärme und Druck erreicht wird.

Es besteht auch die Möglichkeit, die Platten mittels einer Taktpresse mit einer Beschichtung zu versehen, die aus mit Harzen getränkten Papierlagen besteht.

Von den Käufern der im vorhergehenden genannten Platten wird nicht nur eine hohe mechanische Widerstandsfähigkeit der Oberflächenschicht gefordert, die durch das Laminat erreicht wird, sondern es wird auch eine Strukturierung der Oberfläche mit den verschiedensten Mustern verlangt. Zur Erzielung dieser Musterungen werden Prägewerkzeuge eingesetzt.

Es ist bekannt, eine Strukturierung der Laminatoberfläche während der Laminatherstellung in der Doppelbandpresse vorzunehmen. So wird z. B. als Strukturbildner in die Reaktionszone der Doppelbandpresse eine Trägerbahn eingeführt, mit der eine oder auch zwei Laminatbahnen gleichzeitig strukturiert werden können. Bei dem bekannten Verfahren wird die Laminatherstellung durch Prägemaßnahmen in der Bandpresse beeinträchtigt, da eine Faltenbildung auftreten kann. Ferner ist bekannt, ein Preßband als Prägeband auszuführen. Beide Verfahren sind aufwendig und erfordern lange Rüstzeiten.

Aus der DE-A-2 327 409 ist eine Vorrichtung zum Einbringen einer Oberflächenstruktur in ein mit unter Wärme aushärtenden Kondensationsharzen getränktes Papier bekannt, bei dem das getränkte Papier kontinuierlich durch eine Bandpresse geführt und das so gefertigte Produkt einer Prägevorrichtung zugeleitet wird. Dabei erfolgt der Prägevorgang durch eine Kombination einer kontinuierlichen Pressmaschine und Prägewalzen.

Der Erfindung liegt die Aufgabe zugrunde, eine Vorrichtung zum Einbringen einer Oberflächenstruktur in ein Laminat oder in die Beschichtung eines Substrats so zu gestalten, daß der Prägevorgang zwar unter Ausnutzung der Produktionswärme des Laminats vorgenommen werden kann, jedoch die Prägung außerhalb der Presse erfolgt und der Prägevorgang intensiviert wird.

Diese Aufgabe wird erfindungsgemäß mit einer Vorrichtung mit den Merkmalen des Anspruches 1 gelöst.

Weitere Merkmale der Erfindung ergeben sich aus den abhängigen Ansprüchen und der folgenden Beschreibung von in der Zeichnung dargestellten Vorrichtungen.

Mittels der erfindungsgemäßen Vorrichtung kann das in einer Bandpresse kontinuierlich gefertigte Laminat bei fortgesetztem kontinuierlichem Transport durch eine dem Austragende der Bandpresse zugeordnete Prägevorrichtung geführt und das Laminat auf dem Weg vom Austragende der Bandpresse zur Prägevorrichtung und im Bereich der Prägevorrichtung auf der Temperatur T1 am Austragende der Bandpresse gehalten oder auf dem Weg vom Austragende der Bandpresse zur Prägevorrichtung auf eine gegenüber T1 erhöhte Temperatur T2 gebracht werden.

Desweiteren ist es vorteilhaft, mindestens eine Papierlage oder sämtliche Kernlagen unter der Dekorschicht des Laminats oder der Beschichtung mit einem Harz einer längeren Aushärtezeit als die der übrigen im Laminat oder in der Beschichtung eingesetzten Harze zu imprägnieren. Hierdurch bildet der Kernbereich des Laminats oder der Beschichtung beim Prägen kein hartes Widerlager, so daß die bei der Prägung auftretende Materialverdrängung ohne Schwierigkeiten durchgeführt werden kann. Hierdurch ergibt sich eine konturgerechte Übertragung vom Prägewerkzeug auf die Laminatschicht.

Durch die Ausnutzung der in der Bandpresse oder in der Taktpresse erzeugten Produktionswärme für das Laminat bzw. für die Beschichtung des Substrats bleibt der Energieaufwand für die in unmittelbarer Nähe der Presse vorgesehene Prägevorrichtung gering.

Bei der erfindungsgemäßen Konstruktion besteht die Möglichkeit, um beim Ausfall einer Prägevorrichtung die Produktion nicht unterbrechen zu müssen, der im Betrieb befindlichen Prägevorrichtung eine weitere Prägevorrichtung zuzuordnen, die in einer kritischen Situation kurzzeitig eingesetzt werden kann.

Es kann auch eine Schnellwechselvorrichtung vorgesehen werden, so daß Strukturwechsel bei geringem Werkzeugaufwand und praktisch ohne Betriebsunterbrechungen durchgeführt werden können.

Es zeigen:
- Figur 1: in schematischer Darstellung eine dem Austragende einer Doppelbandpresse zugeordnete Prägevorrichtung und
- Figur 2: eine Abwandlung der Ausführung nach der Fig. 1
- Figuren 3 und 4: erfindungsgemäße Ausführungsformen, bei denen der Prägespalt in kurzen Schwingungen veränderbar ist.

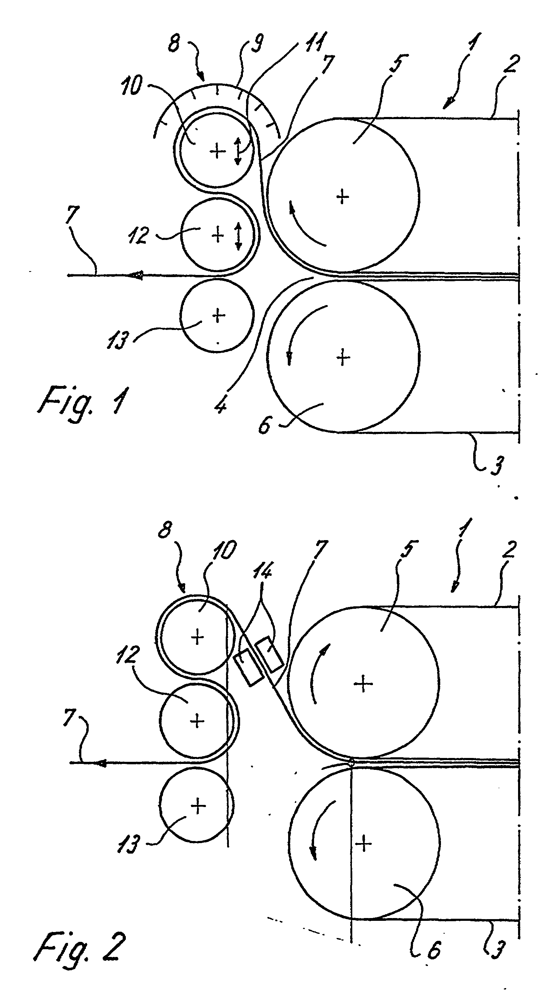

Die in den Fig. 1 und 2 dargestellte Doppelbandpresse 1 weist vorzugsweise aus Stahl gefertigte Endlosbänder 2 und 3 auf, die am dargestellten Austragende 4 Umlenkwalzen 5,6 umlaufen. Die Umlenkwalze 5 ist beheizbar, damit das Laminat 7, das aus der Bandpresse austritt und an einem Teilbereich der Umlenkwalze 5 auf dem Weg zur Prägevorrichtung 8 geführt wird, seine Temperatur halten kann.

Das Laminat 7 verläßt das Anstagende der Doppelbandpresse bei einer Temperatur T₁ von ca. 130 °C.

Durch eine Temperaturführung auf dem Weg vom Austragende 4 bis zur Prägevorrichtung 8 kann diese Temperatur T₁ gehalten oder je nach der Materialzusammensetzung des Laminats auf eine Temperatur T₂ im Bereich von 130 °C bis 180 °C erhöht werden.

Für die Temperaturführung bei der Anlage nach der Fig. 1 ist zusätzlich zu der aufheizbaren Umlenkwalze 5 eine Strahlereinrichtung 9 vorgesehen, die, wie sich aus der Fig. 1 ergibt, gewölbt ausgeführt ist und der Laminatbahn 7 beim Umlaufen einer Gegendruckwalze 10 Wärme zuführt. Diese Gegendruckwalze 10 ist ebenfalls aufheizbar und kann, wie die Pfeile 11 anzeigen, in lotrechter Richtung verstellt werden.

In lotrechter Richtung verstellbar und aufheizbar ist auch die Prägewalze 12, die von der Laminatbahn in den dargestellten Ausführungsbeispielen über einen Winkelbereich von ca. 180° umlaufen wird. Die mit der Oberflächenprägung versehene Laminatbahn wird aus einem Spalt zwischen der Prägewalze 12 und einer unteren, vorzugsweise ortsfesten Gegendruckwalze 13 abgezogen.

Bei dem Ausführungsbeispiel nach der Fig. 2 ist der Umschtingungswinkel zwischen der Laminatbahn 7 und der aufheizbaren Umlenkwalze 5 der Doppelbandpresse 1 geringer als bei dem Ausführungsbeispiel nach der Fig. 1.

Auf dem Weg der Laminatbahn 7 zwischen der Umlenkwalze 5 und der aufheizbaren Gegendruckwalze 10 der Prägevorrichtung 8 ist eine Aufheizeinrichtung 14 angeordnet, durch die die Laminatbahn geführt wird.

Die Prägevorrichtungen, die in den Fig. 1 und 2 aufgezeigt sind, weisen eine Prägewalze 12 auf, die mittig zu den zwei Gegendruckwalzen 10,13 angeordnet ist. Die Drehachsen der Prägewalze 12 und der Gegendruckwalzen 10,13 liegen in einer lotrechten Ebene.

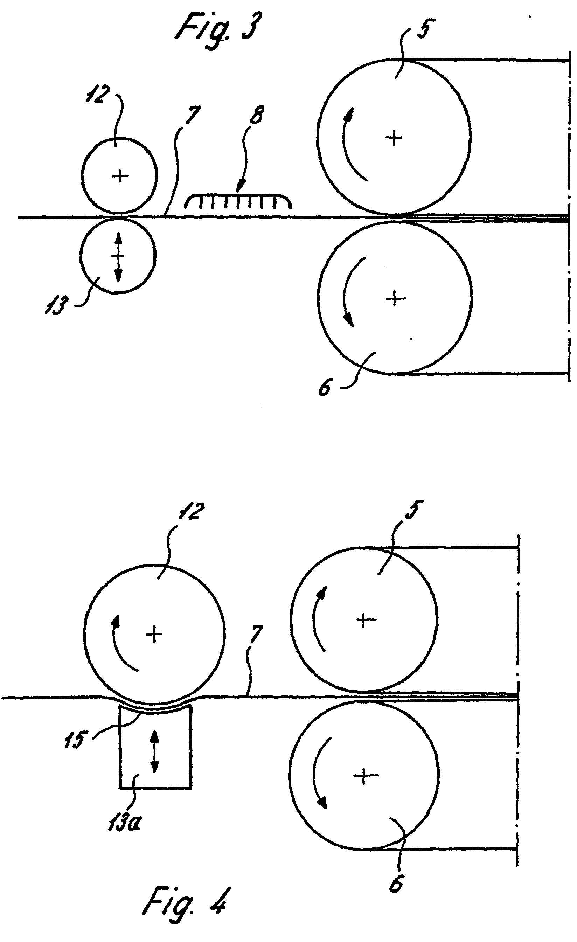

In den Fig. 3 und 4 sind erfindungsgemäße Prägevorrichtungen aufgezeigt, die ebenfalls wie bei den Ausführungsbeispielen nach den Fig. 1 und 2 in unmittelbarer Nachbarschaft des Austragendes der Doppelbandpresse angeordnet sind. In diesen Prägevorrichtungen durchläuft die Laminatbahn 7 einen Prägespalt, der in der Fig. 3 durch die Prägewalze 12 und durch eine Gegendruckwalze 13 und in der Fig. 4 durch eine Prägewalze 12 und ein Widerlager 13a begrenzt wird. Die Widerlagerfläche 15 des Widerlagers 13a ist derart bogenförmig gestaltet, daß sich über die gesamte Länge des Prägespaltes eine übereinstimmende Spalthöhe ergibt.

Zur Intensivierung der Prägung der Laminatbahn, die die Prägespalt durchläuft, wird der Prägespalt in kurzen Schwingungen verändert.

Um dies zu erreichen, kann die Prägewalze 12 alternativ in vertikale Schwingungen versetzt werden. Es besteht auch die Möglichkeit, die Gegendruckwalze 13 vorzuweise in vertikale Schwingungen zu versetzen. Anstelle der Gegendruckwalze kann auch das Widerlager 13a in vertikale Schwingungen versetzt werden.

Die Schwingungen werden mit einer Frequenz von 5 Hz bis 8 kHz (vorzugsweise von 20 Hz bis 5 kHz durchgeführt.

Bei dem Ausführungsbeispiel nach der Fig. 3 ist zwischen dem Austragende der Doppelbandpresse und der Prägevorrichtung eine Strahlereinrichtung 8 vorgesehen, an der die Laminatbahn 7 vorbeigeführt wird.

Auch bei dem Ausführungsbeispiel nach der Fig. 4 kann zwischen dem Austragende der Doppelbandpresse und der Prägevorrichtung eine Aufheizeinrichtung vorgesehen werden.

### Bezugszeichenliste

- 1: Doppelbandpresse
- 2: Endlosband
- 3: Endlosband
- 4: Austragende
- 5: Umlenkwalze
- 6: Umlenkwalze
- 7: Laminat
- 8: Prägevorrichtung
- 9: Strahlereinrichtung
- 10: Gegendruckwalze
- 11: Pfeil
- 12: Prägewalze
- 13: Gegendruckwalze
- 13a: Widerlager
- 14: Aufheizeinrichtung
- 15: Widerlagerfläche

## Patentansprüche

1. Vorrichtung zum Einbringen einer Oberflächenstruktur in ein Laminat oder in die Beschichtung eines Substrats, wobei das Laminat oder die Beschichtung aus mit unter Wärme aushärtenden Kondensationsharzen getränkten Papieren besteht, die Vorrichtung unmittelbar benachbart dem Austragende (4) einer Bandpresse oder einer Taktpresse angeordnet ist und eine Prägewalze (12) und mindestens eine im Abstand zur Prägewalze einstellbare Gegendruckwalze (10,13) oder ein einstellbares Widerlager (13a) aufweist, wobei die Prägewalze (12) und die Gegendruckwalze (10) oder Gegendruckwalzen (10,13) oder das Widerlager aufheizbar sind und der Spalt zwischen Prägewalze (12) und Gegendruckwalze (13) oder zwischen Prägewalze (12) und Widerlager (13a) in kurzen Schwingungen veränderbar ist.

2. Vorrichtung nach Anspruch 1, dadurch gekennzeichnet, daß die Prägewalze (12) in vorzugsweise vertikale Schwingungen versetzbar ist.

3. Vorrichtung nach Anspruch 1, dadurch gekennzeichnet, daß die Gegendruckwalze (13) in vorzugsweise vertikale Schwingungen versetzbar ist.

4. Vorrichtung nach Anspruch 1, dadurch gekennzeichnet, daß das Widerlager (13a) in vertikale Schwingungen versetzbar ist.

5. Vorrichtung nach einem der Ansprüche 1 bis 4, dadurch gekennzeichnet, daß die Schwingungen mit einer Frequenz von 5 Hz bis 8 kHz, vorzugsweise 20 Hz bis 5 kHz durchgeführt werden.

## Claims

1. Device for providing a surface structure in a laminate or the coating of a substrate, whereby the laminate or the coating consists of papers impregnated with condensation resins set by heat, the device is arranged immediately after the conveying end (4) of a double-band press or a cycle press and comprises an embossing roller (12) and at least one adjustable counter pressure roller (10, 13) or an adjustable abutment bearing (13A) spaced to the embossing roller, whereby the embossing roller (12) and the counter pressure roller (10) or the counter pressure rollers (10, 13) or the abutment bearing are heatable and the slit between the embossing roller (12) and the counter pressure roller (13) or between the embossing roller (12) and the abutment bearing (13A) is changeable in short vibrations.

2. Device according to claim 1, **characterised in that** the embossing roller (12) is preferably operable in vertical vibrations.

3. Device according to claim 1, **characterised in that** the counter pressure roller (13) is preferably operable in vertical vibrations.

4. Device according to claim 1, **characterised in that** the abutment bearing (13A) is operable in vertical vibrations.

5. Device according to one of claims 1 to 4, **characterised in that** the vibrations are operated with a frequency of 5 Hz to 8 kHz, preferably 20 Hz to 5 kHz.

## Revendications

1. Dispositif pour réaliser une structure de surface dans un lamifié ou dans le revêtement d'un support, le lamifié ou le revêtement étant constitué de papiers imprégnés de résines de condensation durcissant à la chaleur, le dispositif étant disposé au voisinage immédiat de l'extrémité de sortie (4) d'une presse à bande ou d'une presse intermittente, et comportant un rouleau d'estampage (12) ainsi qu'au moins un rouleau de contre-pression (10, 13), dont la distance est réglable par rapport au rouleau d'estampage, ou une contre-butée (13a) réglable, le rouleau d'estampage (12) et le rouleau de contre-pression (10) ou les rouleaux de contre-pression (10, 13) ou la contre-butée pouvant être chauffés, et l'interstice entre le rouleau d'estampage (12) et le rouleau de contre-pression (13) ou entre le rouleau d'estampage (12) et la contre-butée (13a) pouvant varier selon de courtes oscillations.

2. Dispositif selon la revendication 1, caractérisé en ce que le rouleau d'estampage (12) peut être mis en oscillation, de préférence verticale.

3. Dispositif selon la revendication 1, caractérisé en ce que le rouleau de contre-pression (13) peut être mis en oscillation, de préférence verticale.

4. Dispositif selon la revendication 1, caractérisé en ce que la contre-butée (13a) peut être mise en oscillation verticale.

5. Dispositif selon l'une des revendications 1 à 4, caractérisé en ce que les oscillations sont réalisées à une fréquence de 5 Hz à 8 kHz, de préférence de 20 Hz à 5 kHz.
